# EUROPÄISCHE PATENTSCHRIFT

(11) **EP 2 301 794 B1**
(45) Veröffentlichungstag und Bekanntmachung des Hinweises auf die Patenterteilung: **09.05.2012**
(21) Anmeldenummer: 10178140.9
(22) Anmeldetag: 22.09.2010
(51) Int. Cl.: B60N 2/02, B60N 2/62

(54) **Fahrzeugsitz mit Sitztiefenverstellmöglichkeit und Verfahren zum Verstellen der Sitztiefe eines Sitzteils eines Fahrzeugsitzes**
Vehicle seat with ability to adjust seat depth and method for adjusting the seat depth of a seat section of a vehicle seat
Siège de véhicule doté d'une possibilité de réglage de la profondeur de siège et procédé de réglage de la profondeur de siège d'une partie de siège de véhicule

(30) Priorität: 29.09.2009 DE 102009043296
(43) Veröffentlichungstag der Anmeldung: 30.03.2011
(73) Patentinhaber: GRAMMER AG, 92224 Amberg (DE)
(72) Erfinder: Meiller, Hermann, 92533 Wernberg-Köblitz (DE)
(74) Vertreter: Hannke, Christian

(56) Entgegenhaltungen:
- DE-A1- 2 028 135
- DE-A1-102007 042 489
- JP-A- 2005 305 110

## Beschreibung

Die Erfindung betrifft einen Fahrzeugsitz mit Sitztiefenverstellmöglichkeit und ein Verfahren zum Verstellen der Sitztiefe eines Sitzteils eines Fahrzeugsitzes.

Im Stand der Technik sind bereits verschiedene Ausgestaltungen für Fahrzeugsitze mit Sitztiefenverstelleinrichtung bekannt. Bei den meisten Gestaltungen dieser Art wird dabei zumindest der in Fahrtrichtung gelegene Bereich der Sitzfläche, der sich insbesondere quer zu der in der Regel vorhandenen Rückenlehne nach vorne erstreckt, hinsichtlich seiner Größe verändert, um so eine Anpassung an verschiedene Fahrerbedürfnisse bzw. unterschiedlichen Anatomien der Fahrer zu ermöglichen. Selbstverständlich kann der Bedarf für eine derartige Einstellung nicht nur durch die Anatomie des Fahrers geprägt sein, sondern auch durch weitere Faktoren, wie beispielsweise das Bequemlichkeitsempfinden des Fahrers oder dergleichen.

DE 10 2007 061 329 A1 zeigt einen Fahrzeugsitz mit einer Sitzflächeneinrichtung, deren Sitztiefe verstellbar ist. Zu diesem Zweck ist eine Sitztiefenverstelleinrichtung vorgesehen, die eine erste Umlenkeinrichtung für die Umlenkung der Sitzpolster-Abdeckung in dem der Rückenlehne abgewandten Endbereich der Sitzfläche aufweist. Die Sitztiefenverstelleinrichtung weist wenigstens ein mit einer Polster-Abdeckung gekoppeltes biegeschlaffes Teil auf. Ferner weist die Sitztiefenverstelleinrichtung wenigstens eine von der ersten Umlenkeinrichtung beabstandete zweite Umlenkeinrichtung für die Umlenkung des biegeschlaffen Teils auf.

EP 1 352 596 B1 beschreibt einen Mechanismus zur Umlenkung von Stützflächen, der zur Sitztiefenverlängerung bzw. -verkürzung eines Sitzes dient. Hierbei können zwei U-förmige Stäbe links und rechts vorne aus dem Sitz herausgezogen werden. Je nach Stellung dieser U-Stäbe wird das Polster mehr oder weniger gefaltet oder auseinander gezogen. Der Nachteil einer solchen Konstruktion ist jedoch eine große Faltenbildung des Polsters an dem Fahrzeugsitz.

Weiterhin ist aus dem Stand der Technik ein verschiebbares Sitzteil bekannt. Hier wird das gesamte Sitzteil nach vorne verschoben, was zur Folge hat, dass sich der gesamte Körper der auf dem Sitzteil sitzenden Person nach vorne schiebt. Dabei bleibt die Rückenlehne jedoch zumeist in ihrer Stellung unverändert. Aufgrund des Abstandes zwischen der Rückenlehne und dem unteren Rückenbereich des Sitzes ergibt sich beim nach vorne Verschieben des Sitzteiles eine unerwünschte andere Körperstellung der Person. Dies ist insbesondere in Bezug auf ein bequemes und ergonomisch günstiges Sitzen unerwünscht.

Ein gattungsgemäßer Fahrzeugsitz und ein gattungsgemäßes Verfahren zum Verstellen der Sitztiefe ist aus dem Dokument DE-A-102007042489 bekannt.

Es ist somit Aufgabe der Erfindung, einen Fahrzeugsitz mit Sitztiefenverlängerung und ein Verfahren zum Verstellen der Sitztiefe eines Sitzteils eines Fahrzeugsitzes zur Verfügung zu stellen, bei welchen die zuvor genannten Probleme des Standes der Technik gelöst werden und mit einfachen Mitteln und kostengünstig eine Sitztiefenverlängerung des Fahrzeugsitzes ermöglicht wird.

Diese Aufgabe wird durch den Fahrzeugsitz mit Sitztiefenverstellmöglichkeit nach Patentanspruch 1 erreicht.

Vorteilhafte Ausgestaltungen des Fahrzeugsitzes sind in den abhängigen Patentansprüchen dargelegt.

Es ist von Vorteil, wenn die Schwenkeinrichtung ein Element umfasst, das an zwei voneinander beabstandeten Schenkachsen schwenkbar gelagert ist.

Der Fahrzeugsitz kann zudem eine Stützeinrichtung zur Stützung des Sitzteils umfassen.

Darüber hinaus kann die Schwenkeinrichtung ein Element umfassen, das sowohl an der Stützeinrichtung als auch an dem Sitzteilabschnitt, der an dem ersten Schenkel des Vs der V-förmigen Aussparung angeordnet ist, schwenkbar gelagert ist.

Es ist auch möglich, dass das Element an der Stützeinrichtung um eine erste Schwenkachse schwenkbar gelagert ist und an dem Sitzteilabschnitt, der an dem ersten Schenkel des Vs der V-förmigen Aussparung angeordnet ist, um eine zweite Schwenkachse schwenkbar gelagert ist, die von der ersten Schwenkachse beabstandet ist.

Die erste Schwenkachse kann einer Linie des Vs der V-förmigen Aussparung gegenüberliegend angeordnet sein, bei welcher sich der erste und zweite Schenkel des Vs der V-förmigen Aussparung treffen.

Es besteht auch die Möglichkeit, dass der Sitzteilabschnitt, der an dem ersten Schenkel des Vs der V-förmigen Aussparung angeordnet ist, an dem ersten Schenkel des Vs der V-förmigen Aussparung ein Versteifungselement aufweist.

Die Schwenkeinrichtung kann außerdem eine Feder aufweisen, die in einer Stellung mit maximaler Vorspannkraft gespannt ist, in welcher sowohl die erste als auch die zweite Schwenkachse parallel zu der Linie des Vs der V-förmigen Aussparung angeordnet sind, bei welcher sich der erste und zweite Schenkel des Vs der V-förmigen Aussparung treffen.

Hierbei ist es vorteilhaft, wenn die Feder in einer Stellung, in welcher der erste Schenkel des Vs der V-förmigen Aussparung an dem zweiten Schenkel des Vs der V-förmigen Aussparung anliegt, und in einer Stellung entspannt ist, in welcher der erste und zweite Schenkel des Vs der V-förmigen Aussparung symmetrisch zu einer Symmetrieachse des Vs der V-förmigen Aussparung ist, die senkrecht zu der Linie des Vs der V-förmigen Aussparung, bei welcher sich der erste und zweite Schenkel des Vs der V-förmigen Aussparung treffen, und zu der ersten und zweiten Schwenkachse ist.

Vorzugsweise ist das Sitzteil zumindest teilweise gepolstert. Hierbei kann das Sitzteil im Bereich der V-förmigen Aussparung gepolstert sein.

Das Element kann ein starrer Bandstahl sein.

Ferner kann der Fahrzeugsitz eine Verstelleinrichtung aufweisen, die an dem Fahrzeugsitz zum Verstellen der Schwenkeinrichtung angeordnet ist, um die Sitztiefe des Fahrzeugsitzes zu verlängern / zu verkürzen.

Die zuvor genannte Aufgabe wird zudem durch das Verfahren nach Patentanspruch 14 gelöst.

Die zuvor genannte Aufgabe wird zudem auch durch das Verfahren nach Patentanspruch 15 gelöst.

Mit dem zuvor beschriebenen Fahrzeugsitz und den Verfahren tritt beispielsweise kaum eine Faltenbildung an dem Sitzteil auf und es können die zuvor genannten Probleme des Standes der Technik gelöst werden. Zudem wird eine einfache und kostengünstige Konstruktion bereitgestellt, mit Hilfe welcher eine Sitztiefenverlängerung des Fahrzeugsitzes ermöglicht wird.

Nachfolgend wird die Erfindung unter Bezugnahme auf die beiliegende Zeichnung und anhand von Ausführungsbeispielen näher beschrieben. Es zeigen:
Fig. 1 eine Seitenansicht eines schematisch dargestellten Fahrzeugsitzes gemäß einem ersten Ausführungsbeispiel der vorliegenden Erfindung, bei welchem ein Sitzteil des Fahrzeugsitzes maximal verlängert ist;
Fig. 2 eine weitere Seitenansicht des schematisch dargestellten Fahrzeugsitzes gemäß dem ersten Ausführungsbeispiel der vorliegenden Erfindung, bei welchem das Sitzteil des Fahrzeugsitzes maximal verkürzt ist;
Fig. 3 eine weitere Seitenansicht des schematisch dargestellten Fahrzeugsitzes von Fig. 1, bei welchem eine Verstelleinrichtung angeordnet ist;
Fig. 4 ein Detail einer Schwenkeinrichtung des in Fig. 1 bis Fig. 3 gezeigten Fahrzeugsitzes gemäß einer Variante eines zweiten Ausführungsbeispiels der vorliegenden Erfindung;

### (Erstes Ausführungsbeispiel)

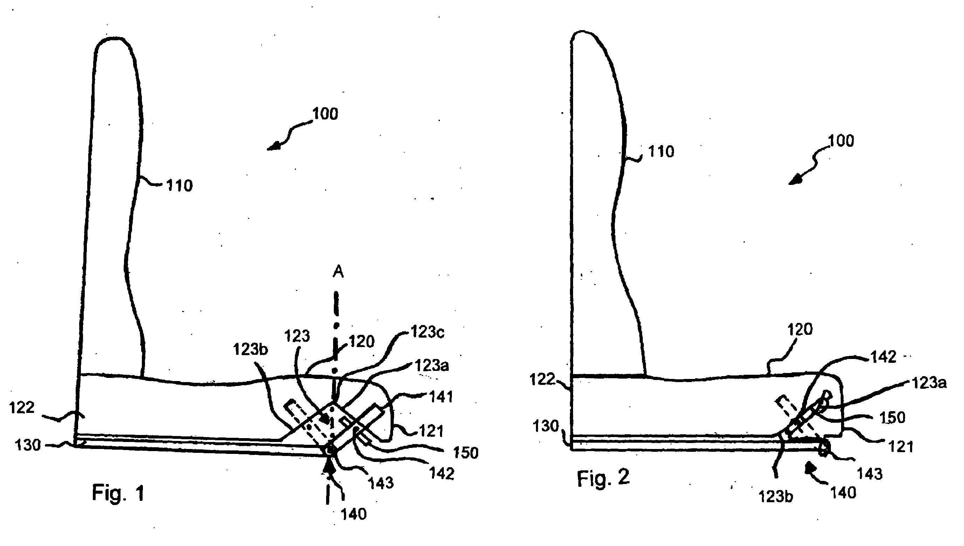

In Fig. 1 ist eine Seitenansicht eines Fahrzeugsitzes 100 gemäß dem vorliegenden Ausführungsbeispiel der vorliegenden Erfindung dargestellt. Der Fahrzeugsitz 100 hat eine Rückenlehne 110 und ein Sitzteil 120, die aneinander befestigt sind. Der Fahrzeugsitz 100 hat eine Stützeinrichtung 130, an welcher das Sitzteil 120 montiert ist. Die Rückenlehne 110 und das Sitzteil 120 sind vorzugsweise zumindest auf der Seite gepolstert, auf welcher ein Insasse eines Fahrzeugs üblicherweise Platz nimmt.

Das Sitzteil 120 hat im Wesentlichen zwei Sitzteilabschnitte 121 und 122, die durch eine V-förmige Aussparung 123 des Sitzteils 120 gebildet sind, die sich über die gesamte Breite des Sitzteils 120 erstreckt. Das heißt, das Sitzteil 120 weist an seiner der Stützeinrichtung 130 zugewandten Seite, also seiner Unterseite, eine V-förmige Aussparung 123 auf, die einen ersten Schenkel 123a und einen zweiten Schenkel 123b hat. Der erste Schenkel 123a befindet sich näher zu der Vorderkante des Sitzteils 120 als der zweite Schenkel 123b des Vs der V-förmigen Aussparung. Die Vorderkante des Sitzteils 120 ist die von der Rückenlehne 110 abgewandte Seite des Sitzteils 120. Die V-förmige Aussparung ist so in dem Sitzteil 120 angeordnet, dass sie zu der Unterseite des Sitzteils hin offen ist.

Anders ausgedrückt, der Sitzteilabschnitt 121, der nachfolgend auch als erster Sitzteilabschnitt 121 bezeichnet ist, ist an dem ersten Schenkel 123a angeordnet. Und der Sitzteilabschnitt 122, der nachfolgend auch als zweiter Sitzteilabschnitt 122 bezeichnet ist, ist an dem zweiten Schenkel 123b angeordnet. Das Sitzteil 120 wird durch die Stützeinrichtung 130 gestützt.

Zudem hat der Fahrzeugsitz 100 eine Schwenkeinrichtung 140, die an der V-förmigen Aussparung 123 angeordnet ist und zum Schwenken bzw. Klappen des ersten Sitzteilabschnitts 121 zu dem zweiten Schenkel 123b dient. Der Fahrzeugsitz 100 hat zudem an dem ersten Schenkel 123a bzw. an der Unterseite des ersten Sitzteilabschnitts 121 ein Versteifungselement 150, wodurch ein Klappen des ersten Sitzteilabschnitts 121 in Bezug zu dem zweiten Sitzteilabschnitt 122 ermöglicht wird. Auf diese Weise kann verhindert werden, dass sich der erste Sitzteilabschnitt 121 beim Betätigen der Schwenkeinrichtung 140 nur verbiegt und nicht eingeklappt wird.

Nun wird die Schwenkeinrichtung 140 unter Bezugnahme auf Fig. 1 und Fig. 2 ausführlicher beschrieben, in welchen die maximale Verlängerung und Verkürzung des Sitzteils 120 bzw. der Sitzteiltiefe dargestellt ist.

Wie in Fig. 1 und Fig. 2 gezeigt, hat die Schwenkeinrichtung 140 ein Element 141, das an einer ersten Schwenkachse 142 und einer zweiten Schwenkachse 143 schwenkbar gelagert ist. Die erste Schwenkachse 142 ist durch eine Befestigung des Elements 141 an der Stützeinrichtung 130 realisiert, und die zweite Schwenkachse 143 ist durch eine Befestigung des Elements 141 an dem ersten Sitzabschnitt 121 realisiert. Dadurch sind die erste und zweite Schwenkachse 142, 143 voneinander beabstandet.

Durch diese Anordnung des Elements 141 an dem Fahrzeugsitz bewirkt ein Schwenken des Elements 141 um die erste Schwenkachse 142 gleichzeitig ein Schwenken des Elements 141 um die zweite Schwenkachse 143. Insgesamt kann durch ein Schwenken des Elements 141 um die erste und zweite Schwenkachse 142, 143 der erste Schenkel 123a des ersten Sitzteilabschnitts 121 an den zweiten Schenkel 123a des zweiten Sitzteilabschnitts 122 geklappt werden. Das heißt, der erste Sitzteilabschnitt 121 kann von dem in Fig. 1 gezeigten Zustand in den in Fig. 2 gezeigten Zustand geklappt werden. Dadurch kann das Sitzteil 120 eingeklappt werden. Zur weiteren Verdeutlichung, ist der in Fig. 2 gezeigte Zustand mit gestrichelten Linien auch in Fig. 1 angedeutet, und der in Fig. 1 gezeigte Zustand ist mit gestrichelten Linien auch in Fig. 2 angedeutet.

Für das beschriebene Schwenken kann das Element 141 an seinem oberen Ende 141a, das heißt dem von der Stützeinrichtung 130 entfernten Ende, von der Hand einer Bedienperson gegriffen werden, und von dem vorderen Bereich des Sitzteils 120, das heißt seiner Vorderkante, in Richtung der Rückenlehne 110 bewegt werden. Hierzu ragt das Element 141 vorzugsweise so weit über die erste Schwenkachse 143 nach oben hinaus, dass es bequem von einer Hand einer Bedienperson gegriffen werden kann.

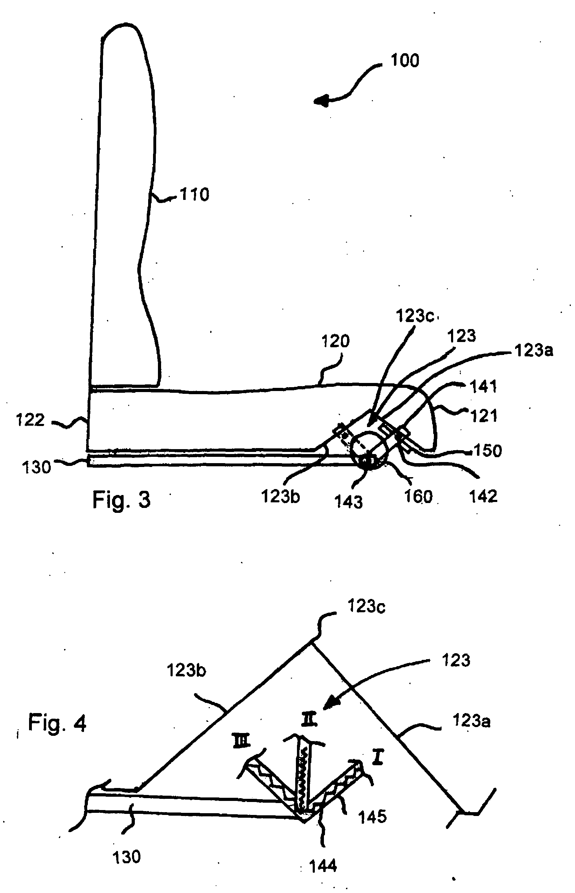

Die beschriebene Bewegung des Elements 141 kann auch mit Hilfe einer Verstelleinrichtung 160 ausgeführt werden, die in Fig. 3 angedeutet ist Hierzu ist die Verstelleinrichtung 160 an dem Fahrzeugsitz 100 zum Verstellen der Schwenkeinrichtung 140 angeordnet. Mit der Verstelleinrichtung 160 kann also die Sitztiefe des Fahrzeugsitzes 100 verkürzt werden. Bei Verwendung der Verstelleinrichtung 160 kann das Element kurz über der ersten Schwenkachse 143 enden, da es nicht von einer Hand einer Bedienperson gegriffen werden braucht. Die Verstelleinrichtung ist in Fig. 3 als Rad 160 dargestellt, das zum Verstellen des ersten Sitzteilabschnitts 121 zu drehen ist.

Zum Verlängern des Sitzes aus der in Fig. 2 gezeigten Stellung des ersten und zweiten Sitzteilabschnitts 121, 122 heraus ist das Element 141 also entweder von Hand, wie zuvor beschrieben, oder mittels der Verstelleinrichtung 160 wieder zurück in die in Fig. 1 gezeigte Stellung zu schwenken. Auf diese Weise kann der erste Sitzteilabschnitt 121, der an dem ersten Schenkel 123a des Vs der V-förmigen Aussparung 123 angeordnet ist, zu dem zweiten Schenkel 123b des Vs der V-förmigen Aussparung 123 geschwenkt werden. Und außerdem kann der erste Sitzteilabschnitt 121, der an dem ersten Schenkel 123a des Vs der V-förmigen Aussparung 123 angeordnet ist, in maximalen Abstand zu dem zweiten Schenkel 123b des Vs der V-förmigen Aussparung 123 geschwenkt oder geklappt werden.

Die Stützeinrichtung 130 ist so lang bemessen, dass sie nicht über die Unterkante 124 des vorderen Bereichs des Sitzteils 120 aus dem Fahrzeugsitz 100 hinaussteht, wenn der erste Sitzteilabschnitt 121 an den zweiten Sitzteilabschnitt 122 bzw. der erste Schenkel 123a zu dem zweiten Schenkel 123b geschwenkt bzw. geklappt ist. Das heißt, wie in Fig. 1 und Fig. 2 gezeigt, ist die Stützeinrichtung 130 an der Unterkante 124 des vorderen Bereichs des Sitzteils 120 etwas kürzer als das Sitzteil 120, wenn der erste Sitzteilabschnitt 121 an den zweiten Sitzteilabschnitt 122 geklappt ist. Dadurch kann die Stützeinrichtung 130 in keiner Stellung des ersten Sitzteilabschnitts 121 zu einem unangenehmen Sitzgefühl für eine Bedienperson oder gar Verletzungen einer Bedienperson führen.

Das Element 141 ist in Bezug zu der V-förmigen Aussparung 123 derart an der Stützeinrichtung 130 befestigt, dass die erste Schwenkachse 143 einer Linie 123c des Vs der V-förmigen Aussparung 123 gegenüberliegend angeordnet ist. Die Linie 123c ist die Linie, bei welcher sich der erste und zweite Schenkel 123a, 123b des Vs der V-förmigen Aussparung 123 treffen. Das heißt, die Linie 123c bildet jeweils den obersten Bereich des auf dem Kopf stehenden Vs der V-förmigen Aussparung 123.

Das Element 141 ist vorzugsweise bandförmig und kann ein starres Metallband, insbesondere ein Bandstahl sein. Das Element 141 kann jedoch auch beispielsweise aus Kunststoff oder jedem anderen geeigneten starren Material gefertigt sein.

### (Zweites Ausführungsbeispiel)

Das zweite Ausführungsbeispiel ist in Bezug auf die Grundkonstruktion des Fahrzeugsitzes identisch zu dem ersten Ausführungsbeispiel. Daher werden im Folgenden nur die von dem ersten Ausführungsbeispiel verschiedenen Teile des zweiten Ausführungsbeispiels beschrieben.

Bei dem zweiten Ausführungsbeispiel findet ein Klappmechanismus des Sitzteils 120 immer dadurch statt, dass die Schwenkeinrichtung 140 zusätzlich einen Feder-Mechanismus für eine Schwellerbildung aufweist. Dieser Feder-Mechanismus bewirkt, dass bei Einklappen des ersten Sitzteilabschnitts 121 eine zwischen erstem Sitzteilabschnitt 121 und Stützeinrichtung 130 vorhandene Feder während des Schwenkens des Elements 141 gespannt und entspannt wird.

Der Feder-Mechanismus hat hierzu eine Feder, die in einer Stellung II (vgl. Fig. 4) mit einer vorbestimmten Vorspannkraft gespannt ist, in welcher die Linie 123c des Vs der V-förmigen Aussparung 123, bei welcher sich der erste und zweite Schenkel 123a, 123b des Vs der V-förmigen Aussparung 123 treffen, parallel zu sowohl der ersten als auch der zweiten Schwenkachse 142, 143 angeordnet ist.

Zudem ist die Feder in einer Stellung III (vgl. Fig. 4) entspannt oder mit einer geringeren Vorspannkraft als der vorbestimmten Vorspannkraft gespannt, in welcher der erste Schenkel 123a des Vs der V-förmigen Aussparung 123 an dem zweiten Schenkel 123b des Vs der V-förmigen Aussparung 123 anliegt. Zusätzlich ist die Feder auch in einer Stellung I (vgl. Fig. 4) entspannt oder mit einer geringeren Vorspannkraft als der vorbestimmten Vorspannkraft gespannt, in welcher der erste und zweite Schenkel 123a, 123b des Vs der V-förmigen Aussparung 123 symmetrisch zu einer Symmetrieachse A des Vs der V-förmigen Aussparung 123 ist, die senkrecht zu der Linie 123c des Vs der V-förmigen Aussparung 123, bei welcher sich der erste und zweite Schenkel 123a, 123b des Vs der V-förmigen Aussparung 123 treffen, und zu der ersten und zweiten Schwenkachse 142, 143 ist.

Bei der für das erste Ausführungsbeispiel gezeigten Konstruktion des Fahrzeugsitzes, kann das Element 141 als Blattfeder ausgeführt sein, die derart montiert ist, dass sie sich wie zuvor beschrieben spannt und entspannt.

Als Variante dazu kann die Feder auch eine Spiralfeder 144 sein, die entlang eines Bolzens 145 geführt wird und zwischen erstem Sitzteilabschnitt 121 und der Stützeinrichtung 130 montiert ist, wie in Fig. 4 gezeigt. Beispielsweise kann die Spiralfeder 144 an der Stützeinrichtung 130 befestigt sein. Die Spiralfeder 144 und der Bolzen 145 können auch in dem Element 141 integriert sein.

### (Allgemeines)

Alle zuvor beschriebenen Ausgestaltungen des Fahrzeugsitzes und des Verfahrens können einzeln oder in allen möglichen Kombinationen Verwendung finden. Insbesondere sind die folgenden Modifikationen möglich.

Die Form bzw. Gestaltung des Fahrzeugsitzes 100 ist insoweit beliebig, dass die Funktion der zuvor beschriebenen Schwenkeinrichtung gewährleistet ist. Das bedeutet insbesondere, dass die genaue Ausführung der Rückenlehne 110, beispielsweise in ihren Abmessungen, mit/ohne Polster, Design usw., und beispielsweise das Design oder die Breite des Sitzteiles 120 beliebig ist. Beispielsweise kann der Fahrzeugsitz auch ohne Rückenlehne ausgeführt sein, wie beispielsweise bei einem Traktor.

Das Sitzteil 120 ist zusammen mit dem Element 141 und dem Versteifungselement 150 vorzugsweise derart auszuführen, dass die V-förmige Aussparung 123 auch beim Sitzen auf dem verlängerten Sitzteil 120, also der in Fig. 1 gezeigten Stellung des Sitzteils 120 für die darauf sitzende Person nicht unangenehm bemerkbar macht. Hierzu kann das Sitzteil 120 beispielsweise auch mit einem genügend biegesteifen Material ausgeführt sein. Je nach Art dieses Materials kann das Versteifungselement 150 also auch weggelassen werden.

Der vorgenannte Fahrzeugsitz 100 kann beispielsweise in einem beliebigen Fahrzeug, wie beispielsweise einem Straßenfahrzeug, insbesondere einem Kraftfahrzeug, Lastkraftwagen, usw., einem Schienenfahrzeug, insbesondere einem Personenwaggon einer Eisenbahngesellschaft usw., einem Luftfahrzeug oder auch einem Gabelstapler oder landwirtschaftlich genutzten Fahrzeug usw. zum Einsatz kommen.

Sämtliche vorgenannten Ausführungen hinsichtlich des Fahrzeugsitzes können selbstverständlich auch auf einen Bürostuhl oder andere derartige Stühle Anwendung finden. Insbesondere die hinsichtlich der Mechanik des Sitzes gemachten Ausführungen sind ebenso auf einen Bürostuhl anwendbar. Auch sind die Patentansprüche, welche sich auf einen Fahrzeugsitz richten, auch übertragen auf einen Bürostuhl, zu lesen. Die im Zusammenhang mit dem Fahrzeug an sich gemachten Ausführungen, auch hinsichtlich des Fahrzeugsitzes, finden somit bei der Anwendung des Erfindungsgegenstandes auf den Bürostuhl keine Anwendung.

Sämtliche in den Anmeldungsunterlagen offenbarten Merkmale werden als erfindungswesentlich beansprucht, sofern sie einzeln oder in Kombination gegenüber dem Stand der Technik neu sind.

### Bezugszeichenliste

- 100: Fahrzeugsitz
- 110: Rückenlehne
- 120: Sitzteil
- 121: Erster Sitzteilabschnitt
- 122: Zweiter Sitzteilabschnitt
- 123: V-förmigen Aussparung
- 123a: erster Schenkel des Vs der V-förmigen Aussparung 123
- 123b: zweiter Schenkel des Vs der V-förmigen Aussparung 123
- 123c: Linie des Vs der V-förmigen Aussparung 123
- 124: Unterkante des vorderen Bereichs des Sitzteils 120
- 130: Stützeinrichtung
- 140: Schwenkeinrichtung
- 141: Element
- 142: Erste Schwenkachse
- 143: Zweite Schwenkachse
- 144: Spiralfeder
- 145: Bolzen
- 150: Versteifungselement
- 160: Verstelleinrichtung
- A: Symmetrieachse des Vs der V-förmigen Aussparung 123
- I, II, III: Stellungen der Spiralfeder 144

## Patentansprüche

1. Fahrzeugsitz (100) mit Sitztiefenverstellmöglichkeit, mit
einem Sitzteil (120), welches in seiner Unterseite eine V-förmige Aussparung (123) aufweist, die sich über die gesamte Breite des Sitzteils (120) erstreckt, und einer Schwenkeinrichtung (140) zum Schwenken eines Sitzteilabschnitts (121), der an dem ersten Schenkel (123a) des Vs der V-förmigen Aussparung (123) angeordnet ist, zu dem zweiten Schenkel (123b) des Vs der V-förmigen Aussparung (123),
wobei sich der erste Schenkel (123a) des Vs der V-förmigen Aussparung (123) näher an der Vorderkante des Sitzteils (120) befindet als der zweite Schenkel (123b) des Vs der V-förmigen Aussparung (123), **dadurch gekennzeichnet, daß** die Schwenkeinrichtung (140) an der V-förmigen Aussparung (123) angeordnet ist, und
der erste und zweite Schenkel (123a, 123b) des Vs der V-förmigen Aussparung (123) symmetrisch zu der Symmetrieachse (A) des Vs der V-förmigen Aussparung (123) ist.

2. Fahrzeugsitz nach Patentanspruch 1, wobei die Schwenkeinrichtung (140) ein Element (141) umfasst, das an zwei voneinander beabstandeten Schwenkachsen (142, 143) schwenkbar gelagert ist.

3. Fahrzeugsitz nach Patentanspruch 1 oder 2, zudem mit einer Stützeinrichtung (130) zur Stützung des Sitzteils (120).

4. Fahrzeugsitz nach Patentanspruch 3, wobei die Schwenkeinrichtung (140) ein Element (141) umfasst, das sowohl an der Stützeinrichtung (130) als auch an dem Sitzteilabschnitt (121), der an dem ersten Schenkel (123a) des Vs der V-förmigen Aussparung (123) angeordnet ist, schwenkbar gelagert ist.

5. Fahrzeugsitz nach Patentanspruch 3 oder 4, wobei das Element (141) an der Stützeinrichtung (130) um eine erste Schwenkachse (142) schwenkbar gelagert ist und an dem Sitzteilabschnitt (121), der an dem ersten Schenkel (123a) des Vs der V-förmigen Aussparung (123) angeordnet ist, um eine zweite Schwenkachse (143) schwenkbar gelagert ist, die von der ersten Schwenkachse (142) beabstandet ist.

6. Fahrzeugsitz nach Patentanspruch 5, wobei die erste Schwenkachse (142) auf einer Linie (123c) des Vs der V-förmigen Aussparung (123) gegenüberliegend angeordnet ist, bei welcher sich der erste und zweite Schenkel (123a, 123b) des Vs der V-förmigen Aussparung (123) treffen.

7. Fahrzeugsitz nach einem der vorangehenden Patentansprüche, wobei der Sitzteilabschnitt (121), der an dem ersten Schenkel (123a) des Vs der V-förmigen Aussparung (123) angeordnet ist, an dem ersten Schenkel (123a) des Vs der V-förmigen Aussparung (123) ein Versteifungselement (150) aufweist.

8. Fahrzeugsitz nach einem der vorangehenden Patentansprüche, wobei die Schwenkeinrichtung (140) eine Feder (141; 144) aufweist, die in einer Stellung mit maximaler Vorspannkraft gespannt ist, in welcher sowohl die erste als auch die zweite Schwenkachse (142, 143) parallel zu der Linie des Vs der V-förmigen Aussparung (123) angeordnet sind, bei welcher sich der erste und zweite Schenkel (123a, 123b) des Vs der V-förmigen Aussparung (123) treffen.

9. Fahrzeugsitz nach einem der vorangehenden Patentansprüche, wobei die Feder in einer Stellung, in welcher der erste Schenkel (123a) des Vs der V-förmigen Aussparung (123) an dem zweiten Schenkel (123b) des Vs der V-förmigen Aussparung (123) anliegt, gespannt ist und in einer Stellung entspannt ist, in welcher der erste und zweite Schenkel (123a, 123b) des Vs der V-förmigen Aussparung (123) symmetrisch zu der Symmetrieachse (A) des Vs der V-förmigen Aussparung (123) ist, die senkrecht zu der Linie (123c) des Vs der V-förmigen Aussparung (123), bei welcher sich der erste und zweite Schenkel (123a, 123b) des Vs der V-förmigen Aussparung (123) treffen, und zu der ersten und zweiten Schwenkachse (142, 143) ist.

10. Fahrzeugsitz nach einem der vorangehenden Patentansprüche, wobei das Sitzteil (120) zumindest teilweise gepolstert ist.

11. Fahrzeugsitz nach Patentanspruch 10, wobei das Sitzteil (120) im Bereich der V-förmigen Aussparung (123) gepolstert ist

12. Fahrzeugsitz nach einem der Patentansprüche 2 bis 11, wobei das Element (141) ein starrer Bandstahl ist.

13. Fahrzeugsitz nach einem der vorangehenden Patentansprüche, zudem mit einer Verstelleinrichtung (160), die an dem Fahrzeugsitz (100) zum Verstellen der Schwenkeinrichtung (140) angeordnet ist, um die Sitztiefe des Fahrzeugsitzes (100) zu verlängern / zu verkürzen.

14. Verfahren zum Verstellen der Sitztiefe eines Sitzteils (120) eines Fahrzeugsitzes (100), wobei das Sitzteil (120) an seiner Unterseite eine V-förmige Aussparung (123) aufweist, die sich über die gesamte Breite des Sitzteils (120) erstreckt, und der Fahrzeugsitz (100) eine Schwenkeinrichtung (140) aufweist, **gekennzeichnet durch** die Schritte: Schwenken eines Sitzteilabschnitts (121), der an dem ersten Schenkel (123a) des Vs der V-förmigen Aussparung (123) angeordnet ist, zu dem zweiten Schenkel (123b) des Vs der V-förmigen Aussparung (123), wobei der erste und zweite Schenkel (123a, 123b) des Vs der V-förmigen Aussparung (123) symmetrisch zu der Symmetrieachse (A) des Vs der V-förmigen Aussparung (123) ist, wobei sich der erste Schenkel (123a) des Vs der V-förmigen Aussparung (123) näher zu der Vorderkante des Sitzteils (120) befindet als der zweite Schenkel (123b) des Vs der V-förmigen Aus sparung (123), und die Schwenkeinrichtung (140) an der V-förmigen Aussparung (123) angeordnet ist.

15. Verfahren zum Verstellen der Sitztiefe eines Sitzteils (120) eines Fahrzeugsitzes (100), wobei das Sitzteil (120) an seiner Unterseite eine V-förmige Aussparung (123) aufweist, die sich über die gesamte Breite des Sitzteils (120) erstreckt, und der Fahrzeugsitz (100) eine Schwenkeinrichtung (140) aufweist, **gekennzeichnet durch** die Schritte: Schwenken eines Sitzteilabschnitts (121), der an dem ersten Schenkel (123a) des V's der V-förmigen Aussparung (123) angeordnet ist, in maximalen Abstand zu dem zweiten Schenkel (123b) des Vs der V-förmigen Aussparung (123), wobei der erste und zweite Schenkel (123a, 123b) des Vs der V-förmigen Aussparung (123) symmetrisch zu einer Symmetrieachse (A) des Vs der V-förmigen Aussparung (123) ist wobei sich der erste Schenkel (123a) des Vs der V-förmigen Aussparung (123) näher zu der Vor derkante des Sitzteils (120) befindet als der zweite Schenkel (123b) des Vs der V-förmigen Aussparung (123), und die Schwenkeinrichtung (140) an der V-förmigen Aussparung (123) angeordnet ist.

## Claims

1. A vehicle seat (100) having a seat depth adjustment function, comprising a seat part (120) having a V-shaped recess (123) in its bottom side, which extends over the entire width of the seat part (120), and a pivoting means (140) for pivoting a seat part portion (121) that is disposed on the first leg (123a) of the V of the V-shaped recess (123) to the second leg (123b) of the V of the V-shaped recess (123), wherein the first leg (123a) of the V of the V-shaped recess (123) is located closer to the front edge of the seat part (120) than the second leg (123b) of the V of the V-shaped recess (123),
**characterized in that**
the pivoting means (140) is disposed on the V-shaped recess (123) and the first and second legs (123a, 123b) of the V of the V-shaped recess (123) are symmetrical to the axis (A) of symmetry of the V of the V-shaped recess (123).

2. The vehicle seat according to claim 1, wherein the pivoting means (140) comprises an element (141) which is pivotally supported on two pivoting axes (142, 143) spaced apart from each other.

3. The vehicle seat according to claim 1 or 2, further comprising a support means (130) for supporting the seat part (120).

4. The vehicle seat according to claim 3, wherein the pivoting means (140) comprises an element (141) which is pivotally supported both on the support means (130) and on the seat part portion (121) that is disposed on the first leg (123a) of the V of the V-shaped recess (123).

5. The vehicle seat according to claim 3 or 4, wherein the element (141) is pivotally supported on the support means (130) about a first pivoting axis (142) and is arranged pivotally supported on the seat part portion (121) that is arranged on the first leg (123a) of the V of the V-shaped recess (123), about a second pivoting axis (143) which is spaced apart from the first pivot axis (142).

6. The vehicle seat according to claim 5, wherein the first pivot axis (142) is arranged opposite on a line (123c) of the V of the V-shaped recess (123), at which the first and the second legs (123a, 123b) of the V of the V-shaped recess (123) meet.

7. The vehicle seat according to any one of the preceding claims, wherein the seat part portion (121) that is disposed on the first leg (123a) of the V of the V-shaped recess (123) has a stiffening element (150) on the first leg (123a) of the V of the V-shaped recess (123).

8. The vehicle seat according to any one of the preceding claims, wherein the pivoting means (140) comprises a spring (141; 144) which is tensioned with a maximum biasing force in a position in which both the first and second pivoting axes (142, 143) are arranged parallel to the line of the V of the V-shaped recess (123) at which the first and the second legs (123a, 123b) of the V of the V-shaped recess (123) meet.

9. The vehicle seat according to any one of the preceding claims, wherein the spring is tensioned in a position in which the first leg (123a) of the V of the V-shaped recess (123) rests at the second leg (123b) of the V of the V-shaped recess (123) and is relaxed in a position in which the first and second legs (123a, 123b) of the V of the V-shaped recess (123) are symmetrical to the axis (A) of symmetry of the V of the V-shaped recess (123) which is vertical to the line (123c) of the V of the V-shaped recess 9123) at which the first and second legs (123a, 123b) of the V of the V-shaped recess (123) meet, and to the first and the second pivoting axes (142, 143).

10. The vehicle seat according to any one of the preceding claims, wherein the seat part (120) is at least partly upholstered.

11. The vehicle seat according to claim 10, wherein the seat part (120) is upholstered in the area of the V-shaped recess (123).

12. The vehicle seat according to any one of the preceding claims 2 to 11, wherein the element (141) is a rigid steel strip.

13. The vehicle seat according to any one of the preceding claims, further comprising an adjustment means (160) which is arranged on the vehicle seat (100) for adjusting the pivoting means (140), in order to extend/reduce the seat depth of the vehicle seat (100).

14. A method for adjusting the seat depth of a seat part (120) of a vehicle seat (100), wherein the seat part (120) comprises a V-shaped recess (123) in its bottom side, which extends over the entire width of the seat part (120), and the vehicle seat (100) comprises a pivoting means (140)
**characterized by** the steps
pivoting a seat part portion (121), which is arranged on the first leg (123a) of the V of the V-shaped recess (123), towards the second leg (123b) of the V of the V-shaped recess (123), wherein the first and second legs (123a, 123b) of the V of the V-shaped recess (123) are symmetrical to the axis (A) of symmetry of the V of the V-shaped recess (123), wherein the first leg (123a) of the V of the V-shaped recess (123) being located closer to the front edge of the seat part (120) than the second leg (123b) of the V of the V-shaped recess (123) and the pivoting means (140) is disposed on the V-shaped recess (123).

15. A method for adjusting the seat depth of a seat part (120) of a vehicle seat (100), wherein the seat part (120) comprises a V-shaped recess (123) in its bottom side, which extends over the entire width of the seat part (120), and the vehicle seat (100) comprises a pivoting means (140)
**characterized by** the steps
pivoting a seat part portion (121), which is arranged on the first leg (123a) of the V of the V-shaped recess (123), to the maximum distance from the second leg (123b) of the V of the V-shaped recess (123), wherein the first and second legs (123a, 123b) of the V of the V-shaped recess (123) are symmetrical to the axis (A) of symmetry of the V of the V-shaped recess (123), wherein the first leg (123a) of the V of the V-shaped recess (123) being located closer to the front edge of the seat part (120) than the second leg (123b) of the V of the V-shaped recess (123) and the pivoting means (140) is disposed on the V-shaped recess (123).

## Revendications

1. Siège de véhicule (100) avec possibilité de réglage de la profondeur du siège, comprenant :
une partie d'assise (120), qui présente sur sa partie inférieure un évidement (123) en forme de V, qui s'étend sur toute la largeur de la partie d'assise (120), et un dispositif de pivotement (140) pour faire pivoter une section de partie d'assise (121), qui est agencée sur la première branche (123a) du V de l'évidement (123) en forme de V, vers la seconde branche (123b) du V de l'évidement (123) en forme de V,
dans lequel la première branche (123a) du V de l'évidement (123) en forme de V se trouve plus près du bord avant de la partie d'assise (120) que la seconde branche (123b) du V de l'évidement (123) en forme de V, **caractérisé en ce que** le dispositif de pivotement (140) est agencé sur l'évidement (123) en forme de V, et les première et seconde branches (123a, 123b) du V de l'évidement (123) en forme de V sont symétriques par rapport à l'axe de symétrie (A) du V de l'évidement (123) en forme de V.

2. Siège de véhicule selon la revendication 1, dans lequel le dispositif de pivotement (140) comprend un élément (141), qui est monté, de manière à pouvoir pivoter, sur deux axes pivots (142, 143) distants l'un de l'autre.

3. Siège de véhicule selon la revendication 1 ou 2, comprenant en outre un dispositif de soutien (130) pour soutenir la partie d'assise (120).

4. Siège de véhicule selon la revendication 3, dans lequel le dispositif de pivotement (140) comprend un élément (141) qui est monté, de manière à pouvoir pivoter, autant sur le dispositif de soutien (130) que sur la section de partie d'assise (121), qui est agencée sur la première branche (123a) du V de l'évidement (123) en forme de V.

5. Siège de véhicule selon la revendication 3 ou 4, dans lequel l'élément (141) est monté contre le dispositif de soutien (130) de manière à pouvoir pivoter autour d'un premier axe pivot (142), et est monté contre la section de partie d'assise (121), qui est agencée contre la première branche (123a) du V de l'évidement (123) en forme de V, de manière à pouvoir pivoter autour d'un second axe pivot (143), qui est à distance du premier axe pivot (142).

6. Siège de véhicule selon la revendication 5, dans lequel le premier axe pivot (142) est agencé en face sur une ligne (123c) du V de l'évidement (123) en forme de V, où les première et seconde branches (123a, 123b) du V de l'évidement (123) en forme de V se rencontrent.

7. Siège de véhicule selon l'une quelconque des revendications précédentes, dans lequel la section de partie d'assise (121), qui est agencée contre la première branche (123a) du V de l'évidement (123) en forme de V, présente un élément de renfort (150) contre la première branche (123a) du V de l'évidement (123) en forme de V.

8. Siège de véhicule selon l'une quelconque des revendications précédentes, dans lequel le dispositif de pivotement (140) présente un ressort (141 ; 144), qui est tendu dans une position avec une force de précontrainte maximale, dans laquelle autant le premier axe pivot que le second axe pivot (142, 143) sont agencés parallèlement à la ligne du V de l'évidement (123) en forme de V, où les première et seconde branches (123a, 123b) du V de l'évidement (123) en forme de V se rencontrent.

9. Siège de véhicule selon l'une quelconque des revendications précédentes, dans lequel le ressort est tendu dans une position, dans laquelle la première branche (123a) du V de l'évidement (123) en forme de V s'applique sur la seconde branche (123b) du V de l'évidement (123) en forme de V et est détendu dans une position, dans laquelle les première et seconde branches (123a, 123b) du V de l'évidement (123) en forme de V sont symétriques par rapport à l'axe de symétrie (A) du V de l'évidement (123) en forme de V, qui est perpendiculaire à la ligne (123c) du V de l'évidement (123) en forme de V, où les première et seconde branches (123a, 123b) du V de l'évidement (123) en forme de V se rencontrent, ainsi qu'aux premier et second axes pivots (142, 143).

10. Siège de véhicule selon l'une quelconque des revendications précédentes, dans lequel la partie d'assise (120) est rembourrée au moins en partie.

11. Siège de véhicule selon la revendication 10, dans lequel la partie d'assise (120) est rembourrée dans la zone de l'évidement (123) en forme de V.

12. Siège de véhicule selon l'une quelconque des revendications 2 à 11, dans lequel l'élément (141) est un feuillard d'acier rigide.

13. Siège de véhicule selon l'une quelconque des revendications précédentes, sur lequel est agencé un dispositif de réglage (160) contre le siège de véhicule (100) pour régler le dispositif de pivotement (140) afin de renforcer ou de réduire la profondeur d'assise du siège de véhicule (100).

14. Procédé de réglage de la profondeur d'une partie d'assise (120) d'un siège de véhicule (100), dans lequel la partie d'assise (120) présente sur sa partie inférieure un évidement (123) en forme de V, qui s'étend sur toute la largeur de la partie d'assise (120), et le siège de véhicule (100) présente un dispositif de pivotement (140), **caractérisé par** les étapes suivantes : pivotement d'une section de partie d'assise (121), qui est agencée sur la première branche (123a) du V de l'évidement (123) en forme de V, vers la seconde branche (123b) du V de l'évidement (123) en forme de V, dans lequel les première et seconde branches (123a, 123b) du V de l'évidement (123) en forme de V sont symétriques par rapport à l'axe de symétrie (A) du V de l'évidement (123) en forme de V, dans lequel la première branche (123a) du V de l'évidement (123) en forme de V se trouve plus près du bord avant de la partie d'assise (120) que la seconde branche (123b) du V de l'évidement (123) en forme de V, et le dispositif de pivotement (140) est agencé sur l'évidement (123) en forme de V.

15. Procédé de réglage de la profondeur d'une partie d'assise (120) d'un siège de véhicule (100), dans lequel la partie d'assise (120) présente sur sa partie inférieure un évidement (123) en forme de V, qui s'étend sur toute la largeur de la partie d'assise (120), et le siège de véhicule (100) présente un dispositif de pivotement (140), **caractérisé par** les étapes suivantes :
pivotement d'une section de partie d'assise (121), qui est agencée sur la première branche (123a) du V de l'évidement (123) en forme de V, à distance maximale de la seconde branche (123b) du V de l'évidement (123) en forme de V, dans lequel les première et seconde branches (123a, 123b) du V de l'évidement (123) en forme de V sont symétriques par rapport à l'axe de symétrie (A) du V de l'évidement (123) en forme de V, dans lequel la première branche (123a) du V de l'évidement (123) en forme de V se trouve plus près du bord avant de la partie d'assise (120) que la seconde branche (123b) du V de l'évidement (123) en forme de V, et le dispositif de pivotement (140) est agencé sur l'évidement (123) en forme de V.
